# EUROPEAN PATENT SPECIFICATION

(11) **EP 4 099 146 B1**
(45) Date of publication and mention of the grant of the patent: **24.07.2024**
(21) Application number: 21765522.4
(22) Date of filing: 03.03.2021
(51) Int. Cl.: G06F 3/0481

(54) **SCREEN PARTITION DISPLAY METHOD, TERMINAL, AND COMPUTER STORAGE MEDIUM**
BILDSCHIRM-PARTITIONSANZEIGEVERFAHREN, ENDGERÄT UND COMPUTERSPEICHERMEDIUM
PROCÉDÉ D'AFFICHAGE DE PARTITION D'ÉCRAN, TERMINAL, ET SUPPORT DE STOCKAGE INFORMATIQUE

(30) Priority: 03.03.2020 CN 202010140454
(43) Date of publication of application: 07.12.2022
(73) Proprietor: Petal Cloud Technology Co., Ltd., Dongguan City, Guangdong 523799 (CN)
(72) Inventor: LV, Caiping, Shenzhen, Guangdong 518129 (CN); CAI, Mingxing, Shenzhen, Guangdong 518129 (CN)
(74) Representative: Pfenning, Meinig & Partner mbB
(86) International application number: PCT/CN2021/078942
(87) International publication number: WO 2021/175265

(56) References cited:
- EP-A2- 2 541 384
- EP-A2- 2 541 384
- WO-A1-2012/094656
- CN-A- 106 775 208
- CN-A- 107 491 258
- CN-A- 110 134 476
- CN-A- 111 694 475
- JP-A- 2014 116 004

## Description

### TECHNICAL FIELD

This application relates to the field of terminal technologies, and in particular, to a region-based screen display method, a terminal, and a computer storage medium.

### BACKGROUND

As a screen of a mobile terminal becomes increasingly larger and a display resolution of the screen becomes increasingly higher, a split-screen display function for a large screen is gradually developed. The split-screen display function is to split a screen into a plurality of display regions, and display different content in each display region. However, currently a split-screen function on a mobile terminal is not mature enough, and a split-screen function that can be implemented is not comprehensive enough, which can only display different application content by using different display regions.
EP 2541384 A2 concerns a touchscreen recognizing a touch input and a controller setting a reference line on the touchscreen to correspond to a 1st pattern touch input, the controller partitioning the touchscreen into a 1st region and a 2nd region in accordance with the set reference line, the controller controlling an image displayed on the 1st region to be displayed on the 2nd region in a manner of being reversed.
WO 2012094656 A1 concerns detecting multiple touch locations on a touch screen of an electronic device for at least an activation time and splitting a display area of the touch screen into a first frame and a second frame based on the multiple touch locations.

### SUMMARY

This application provides a region-based screen display method, a terminal, and a computer storage medium, so that screen regions of a terminal can display different pages or a same page of a same application for ease of user operations. The invention as claimed is defined in the independent claims.

To achieve the foregoing objective, this application uses the following technical solutions with only those that are comprised by the independent claims representing the claimed invention.

According to a first aspect, this application provides a region-based screen display method, where the method includes, amongst others,: receiving a screen splitting instruction; splitting a display region on a screen into at least two sub-regions, where the at least two sub-regions include a first sub-region and a second sub-region; receiving a page replication instruction, where the page replication instruction is used to instruct to copy a first page of a target application currently displayed in the first sub-region to the second sub-region; and controlling the second sub-region to display the first page.

In a possible implementation, the controlling the second sub-region to display the first page includes: creating a copy of page content of the first page, and controlling the second sub-region to display the copy.

In a possible implementation, after the controlling the second sub-region to display the first page, the method further includes: receiving a first update operation for the first page displayed in the first sub-region; updating the page content and the copy of the first page based on the first update operation; controlling the first sub-region to display updated page content of the first page; and controlling the second sub-region to display an updated copy.

In a possible implementation, the receiving a first update operation for the first page displayed in the first sub-region includes: receiving a first update operation for a page currently displayed in the first sub-region; and determining that the page currently displayed in the first sub-region is the first page.

In a possible implementation, after the controlling the second sub-region to display the first page, the method further includes: receiving a second update operation for the first page displayed in the second sub-region; and prohibiting updating, based on the second update operation, of the first page displayed in the second sub-region. 6. The method according to any one of claims 1 to 5, where after the controlling the second sub-region to display the first page, the method further includes: receiving a page jump instruction in the first sub-region; and displaying, in the first sub-region, a page indicated by the page jump instruction, and controlling the second sub-region to continue to display the first page.

In a possible implementation, the controlling the second sub-region to display the first page includes: creating a reference pointer of the first page, where the reference pointer is used to point to a storage location for storing page content of the first page; and controlling the second sub-region to display the page content stored at the storage location to which the reference pointer of the first page points.

In a possible implementation, after the controlling the second sub-region to display the first page, the method further includes: receiving a third update operation for the first page displayed in the first sub-region; updating the page content of the first page based on the third update operation; and controlling the second sub-region to display updated page content stored at the storage location to which the reference pointer of the first page points.

In a possible implementation, after the controlling the second sub-region to display the first page, the method further includes: receiving a fourth update operation for the first page displayed in the second sub-region; and prohibiting updating, based on the fourth update operation, of the first page displayed in the second sub-region.

In a possible implementation, after the controlling the second sub-region to display the first page, the method further includes: receiving a page jump instruction for the first sub-region; and displaying, in the first sub-region, a page indicated by the page jump instruction, and controlling the second sub-region to continue to display the first page.

In the first aspect, the controlling the second sub-region to display the first page includes: creating a copy of a first activity chain to obtain a second activity chain, where the first activity chain is an activity chain of the target application when the page replication instruction is received, the activity chain of the target application includes one or more activities linked based on a page start sequence of the target application, and each activity corresponds to one page; and displaying, in the second sub-region, a page corresponding to the last activity in the second activity chain.

In the first aspect, after the controlling the second sub-region to display the first page, the method further includes: receiving a fifth update operation for a page currently displayed in the first sub-region or the second sub-region; searching an activity chain of the other sub-region for an activity corresponding to the page on which the fifth update operation is received, where the other sub-region is a sub-region of the first sub-region and the second sub-region and in which the fifth update operation is not received; updating, based on the fifth update operation, page content of the page on which the fifth update operation is received; and updating, based on the fifth update operation, page content corresponding to a found activity.

In a possible implementation, after the updating, based on the fifth update operation, page content corresponding to a found activity, the method further includes: determining that the found activity is an activity corresponding to a page currently displayed in the other sub-region; and displaying updated page content of the found activity in the other sub-region.

In a possible implementation, after the searching an activity chain of the other sub-region for an activity corresponding to the page on which the fifth update operation is received, the method further includes: determining whether the found activity receives an edit operation; and if a determining result is no, updating, based on the fifth update operation, the page content of the page on which the fifth update operation is received, and updating, based on the fifth update operation, the page content corresponding to the found activity; otherwise, if the determining result is yes, prohibiting updating of the page content of the page on which the fifth update operation is received, and prohibiting updating of the page content corresponding to the found activity.

In the first aspect, after the controlling the second sub-region to display the first page, and before the receiving a fifth update operation for a page currently displayed in the first sub-region or the second sub-region, the method further includes: receiving a page jump instruction for the first sub-region or the second sub-region; and displaying, in a sub-region that receives the page jump instruction, a page indicated by the page jump instruction, and controlling a sub-region that does not receive the page jump instruction to maintain a displayed page unchanged.

In a possible implementation, after the receiving a page replication instruction, the method further includes: displaying the first page or a second page in the first sub-region, where the second page is a previous page of the first page of the target application.

In a possible implementation, before the displaying the first page or a second page in the first sub-region, the method further includes: determining a display policy; and determining, based on the display policy, that the page displayed in the first sub-region is the first page or the second page.

In a possible implementation, the determining a display policy includes: displaying a plurality of optional display policies; and receiving a selection operation in the plurality of optional display policies, so as to determine an optional display policy selected by the selection operation as the display policy.

In a possible implementation, after the receiving a page replication instruction, the method further includes: determining a display policy; and determining, based on the display policy, a page content source of the first page displayed in the second sub-region; and the controlling the second sub-region to display the first page includes: controlling the second sub-region to display page content corresponding to the page content source of the first page.

In a possible implementation, the screen is a touchscreen, the page replication instruction is a drag touch operation on the touchscreen, a start point of the drag touch operation is in the first sub-region, and an end point thereof is in the second sub-region.

According to the region-based screen display method provided in this embodiment of this application, screen regions of a terminal can display different pages or a same page of a same application. A user can view different pages or a same page of an application on a screen, which may be applied to a scenario in which the user needs to simultaneously view different content of a same page of an application or content of different pages of an application, thereby facilitating user operations.

According to a second aspect, this application provides a terminal, including: a touchscreen, a communication module, one or more processors, one or more memories, and one or more computer programs. The processor is coupled to the touchscreen, the communication module, and the memory. The one or more computer programs are stored in the memory. When the terminal runs, the processor executes the one or more computer programs stored in the memory, so that the terminal performs the method provided in any one of the possible implementations of the first aspect.

According to a third aspect, this application provides a computer storage medium, including computer instructions. When the computer instructions run on a terminal, the terminal performs the method provided in any one of the possible implementations of the first aspect.

According to a fourth aspect, this application provides a computer program product. When the computer program product is run on a terminal, the terminal performs the method provided in any one of the possible implementations of the first aspect.

It may be understood that the foregoing provided terminal, computer storage medium, and computer program product are all used to perform the foregoing provided corresponding method. Therefore, for beneficial effects that can be achieved by the foregoing provided terminal, computer storage medium, and computer program product, reference may be made to beneficial effects in the foregoing provided corresponding method, and details are not described herein again.

### BRIEF DESCRIPTION OF DRAWINGS

FIG. 1 to FIG. 12 is a schematic interaction diagram of a region-based screen display method according to an embodiment of this application;
FIG. 13 is a schematic diagram of a software architecture of a region-based screen display method according to an embodiment of this application;
FIG. 14 is a schematic flowchart of a region-based screen display method according to an embodiment of this application; and
FIG. 15 is a schematic diagram of a structure of a terminal according to an embodiment of this application.

### DESCRIPTION OF EMBODIMENTS

The following describes the implementations of embodiments of this application in detail with reference to accompanying drawings.

An embodiment of this application provides a region-based screen display method, which may be applied to a terminal with a display screen. Optionally, the terminal may be an electronic device with a display screen such as a mobile phone, a tablet computer, or a notebook computer, and an operating system of the terminal may be an Android system.

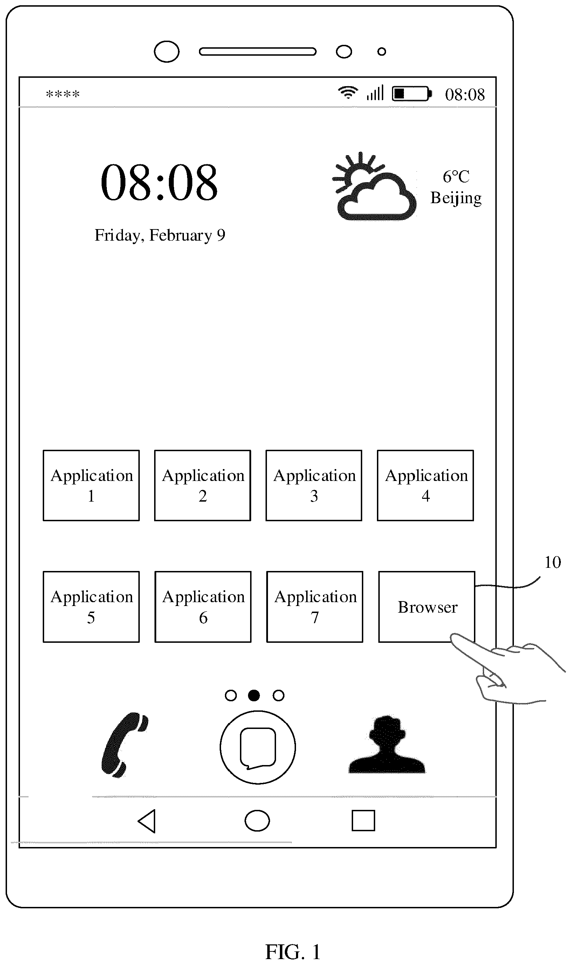

FIG. 1 to FIG. 4 are an optional application scenario of a region-based screen display method according to an embodiment of this application. In this application scenario, a terminal is a mobile phone with a touchscreen, and an operating system of the mobile phone is an Android system.

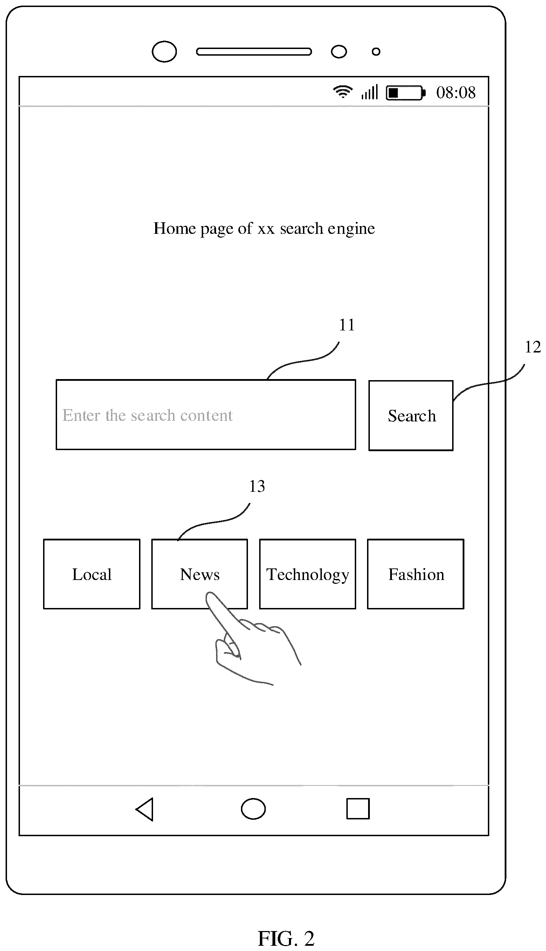

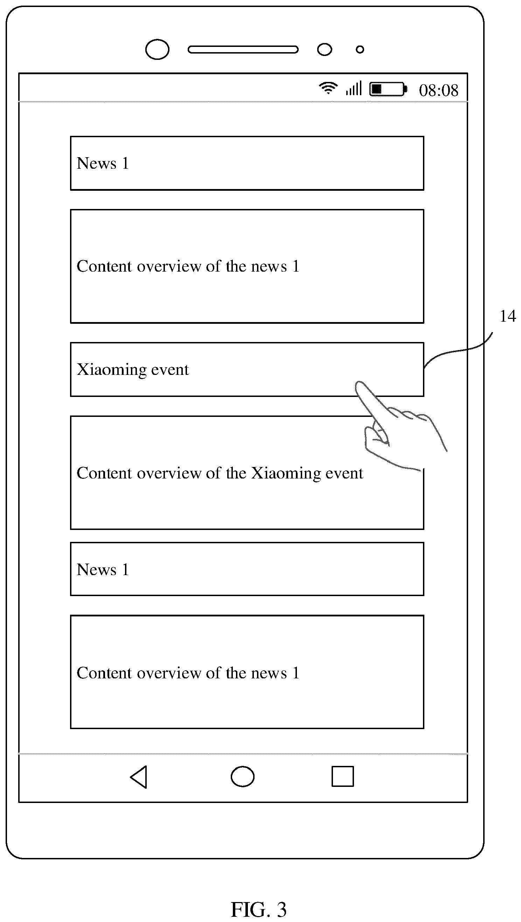

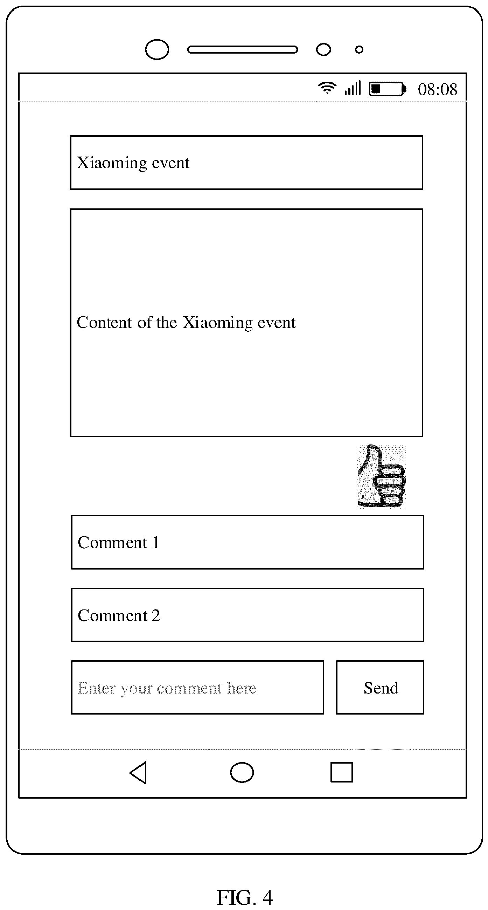

Before the region-based screen display method provided in this embodiment of this application is used, a user may tap an icon of an application on a desktop of the mobile phone. As shown in FIG. 1, the user taps an application icon 10 of a "browser" on the desktop of the screen of the mobile phone, so that an application of the "browser" is opened on the mobile phone, and a default home page of the "browser" is displayed on the screen of the mobile phone. As shown in FIG. 2, a home page of a search engine is displayed: page A. The user may enter a text on page A by using a search box and tap a "search" button 12 to enter a search result page, or tap a link of another page on the home page. For example, as shown in FIG. 2, if the user taps a "news" button 13, the user enters a link page of the "news" button: page B, and page B is shown in FIG. 3. Further, if the user taps a link of a specific news title (for example, a title link 14 of "Xiaoming event") on page B, the user enters page C, as shown in FIG. 4.

In the mobile phone, activity nodes on the foregoing three pages are stored in a form of a linked list: an activity node A→an activity node B→ an activity node C. Each time a page is opened, an activity of the page is linked to a previous page as a node. In this embodiment of this application, the linked list is referred to as an activity chain, and each activity node in the activity chain is separately configured to store one activity. The activity is a component in the Android system that is responsible for interaction with the user. The activity can provide one page, and each activity is corresponding to one page. Page content of each page may include a URL (Uniform Resource Locator, uniform resource locator, that is, a network address) of the page, for example, https:www.xxxxx.news.com/xiaoming.jsp, and information of an activity. Information of each activity includes display content of one page, for example, may include a title of the page (such as "Xiaoming event"), text content of the page (such as Xiaoming goes to an airport), a button of the page (such as a like button, "follow", and "unfollow"), an edit box of the page (such as a text edit box to be commented on), and a resource such as a picture, a video, and an audio on the page. The mobile phone may display a page on the screen shown in FIG. 4 based on the foregoing page content (activity information).

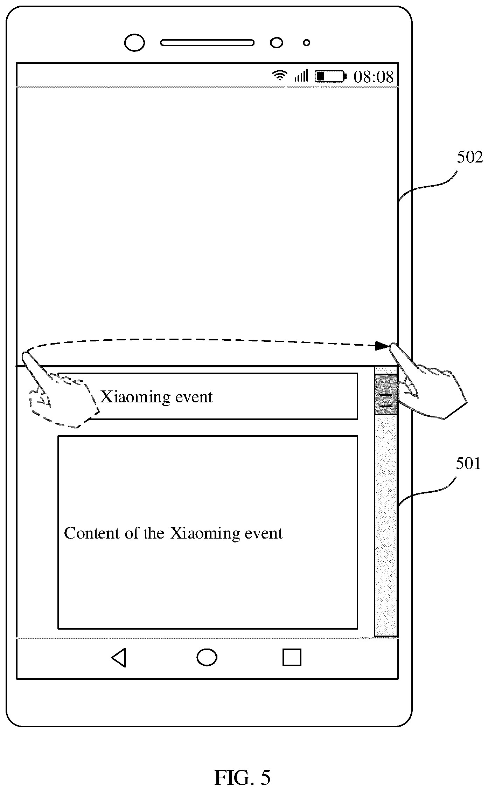

When an interface shown in FIG. 4 is displayed on the screen, if the user executes a screen splitting instruction, a display region on the screen of the mobile phone is divided into at least two regions in response to the screen splitting instruction, including a first sub-region 501 and a second sub-region 502 (optionally, in some other implementations, another region may alternatively be included). For example, the first sub-region 501 and the second sub-region 502 are displayed vertically, and a page (that is, a first page) on which the user executes the screen splitting instruction is displayed in the first sub-region, that is, page C shown in FIG. 5. Optionally, in some other implementations, the first sub-region 501 and the second sub-region 502 may alternatively be displayed horizontally, or the second sub-region 502 is displayed on the first sub-region 501 in a form of a small pop-up window. This is not limited in this embodiment of this application.

The screen splitting instruction is used to trigger region-based screen display. For example, the screen splitting instruction may be that a user shakes the mobile phone, so as to trigger region-based screen display, or the screen splitting instruction may be that the user uses a finger (or another medium) to slide nearby a middle point of a left edge of the screen of the mobile phone to nearby a middle point of a right edge (as shown in FIG. 5), so as to trigger region-based screen display. The foregoing is only used as an example for description, and does not constitute a limitation on this embodiment of this application. After the screen splitting instruction is executed, a blank, a desktop interface of the mobile phone, a home page of an application displayed in the first sub-region 501, or the like may be displayed in the second sub-region 502, and content displayed in the second sub-region 502 may be set based on a specific situation. This is not specifically limited in this embodiment of this application.

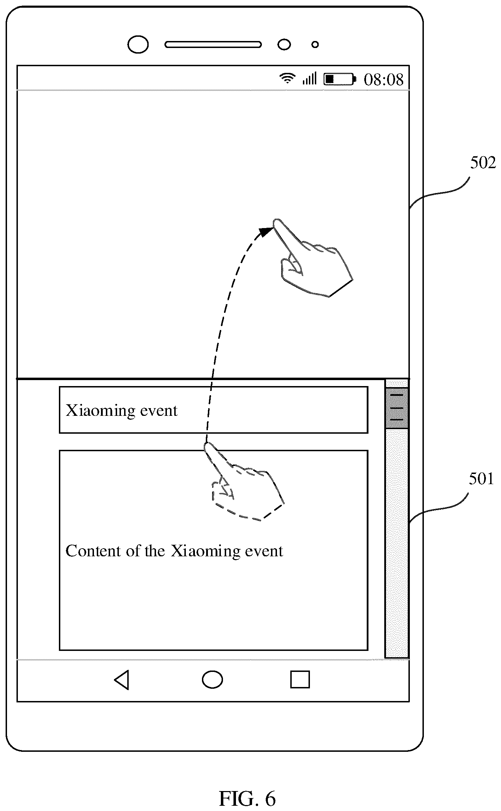

After region-based screen display, the user may perform an operation corresponding to a page replication instruction, where the page replication instruction is used to copy page C in the first sub-region 501 to the second sub-region 502. The page replication instruction may be implemented by performing a specific operation on the mobile phone. For example, an icon of the page replication instruction is displayed on the screen of the mobile phone, and the user taps the icon to execute the page replication instruction. Alternatively, the user may use a finger (or another medium) to perform a drag touch operation on the touchscreen of the mobile phone, that is, tap a location in the first sub-region 501 by using a finger (or another medium), drag to a location in the second sub-region 502 without releasing the finger (or the another medium), and then release the finger (or the another medium), as shown in FIG. 6. After the user performs the operation corresponding to the page replication instruction, the mobile phone receives the page replication instruction.

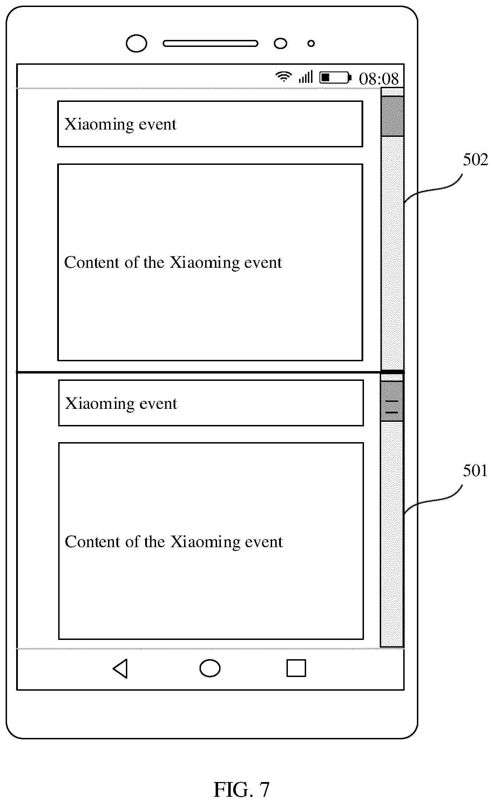

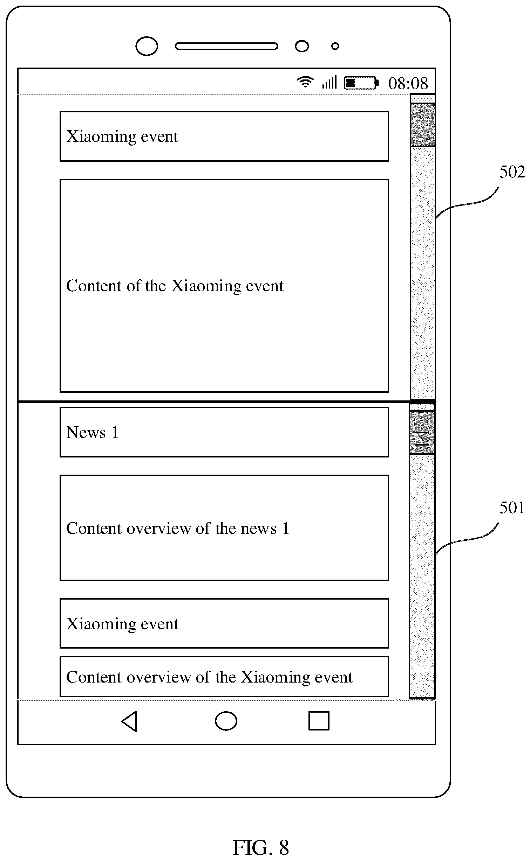

After receiving the page replication instruction, the mobile phone copies page C of the first sub-region 501 to the second sub-region 502, that is, the second sub-region 502 displays page C. In the first sub-region 501, in an optional implementation, page C continues to be displayed, as shown in FIG. 7. In another optional implementation, another page may also be displayed in the first sub-region 501, for example, a previous page of page C in a linked list of the first sub-region 501: page B shown in FIG. 8.

For page C displayed in the second sub-region 502, an optional implementation is as follows: The user may perform an update operation for page C displayed in the second sub-region 502, where the update operation is an update operation on content of page C, for example, an edit operation for confirming posting, for example, entering a text/an expression in a text box (for example, an edit box of a news comment region or an edit box for entering information during account registration) and confirming posting, or tapping some buttons (for example, vote, like, and follow) set on the page. In another optional implementation, the user is not allowed to perform an update operation for page C displayed in the second sub-region 502, that is, an update operation cannot be performed page C displayed in the second sub-region 502.

In an optional implementation, after the second sub-region 502 displays page C, if a page displayed in the first sub-region 501 is page C, and an update operation for page C by the user is received after the page replication instruction is executed, the update operation is synchronized for page C displayed in the second sub-region 502. For example, if a text "xxxx" is entered in a text edit box in the first sub-region 501, and an "OK" button corresponding to the text edit box is tapped to confirm posting of edited text content, the first sub-region 501 receives the update operation, and further posts the entered text, and further page C in the second sub-region 502 is also updated based on updated content in the first sub-region 501.

In an optional implementation, after the second sub-region 502 displays page C, if the first sub-region 501 or the second sub-region 502 receives an update operation, it is necessary to determine whether the other sub-region receives an edit operation; and if the other sub-region is being edited, the update operation cannot be performed on the sub-region that receives the update operation; or if the other sub-region does not receive an edit operation, the update operation can be performed on the sub-region that receives the update operation, and whether the other sub-region needs to be updated based on the update operation may be determined based on a determined display policy.

For example, in the region-based screen display method provided in this embodiment of this application, several optional display policies may be:
① After receiving the page replication instruction, the first sub-region 501 remains on a page displayed when the page replication instruction is received, that is, page C. The second sub-region 502 copies only the page displayed when the first sub-region 501 receives the page replication instruction. In addition, an update operation cannot be performed on the second sub-region 502, and the second sub-region 502 is not to be updated with an update operation received by the page in the first sub-region 501.
(2) After receiving the page replication instruction, the first sub-region 501 remains on a page displayed when the page replication instruction is received, that is, page C. The second sub-region 502 copies only the page displayed when the first sub-region 501 receives the page replication instruction. In addition, an update operation cannot be performed on the second sub-region 502, and the second sub-region 502 is to be updated with an update operation received by the page in the first sub-region 501.
③ After receiving the page replication instruction, the first sub-region 501 returns to a previous page of a page displayed when the page replication instruction is received, that is, page B. The second sub-region 502 copies only the page displayed when the first sub-region 501 receives the page replication instruction. In addition, an update operation cannot be performed on the second sub-region 502, and the second sub-region 502 is not to be updated with an update operation received by the page in the first sub-region 501.
④ After receiving the page replication instruction, the first sub-region 501 returns to a previous page of a page displayed when the page replication instruction is received, that is, page B. The second sub-region 502 copies only the page displayed when the first sub-region 501 receives the page replication instruction. In addition, an update operation cannot be performed on the second sub-region 502, and the second sub-region 502 is to be updated with an update operation received by the page in the first sub-region 501.
(5) After receiving the page replication instruction, the first sub-region 501 remains on a page displayed when the page replication instruction is received, that is, page C, and an update operation can be performed on the second sub-region 502, and the second sub-region 502 is to be updated with an update operation received by the page in the first sub-region 501. In addition, after the first sub-region 501 receives an update operation for another page, if a page to which the second sub-region 502 jumps is a page on which an update operation is received in the first sub-region 501, an updated page is displayed in the second sub-region 502. Similarly, after the second sub-region 502 receives an update operation for another page, if a page to which the first sub-region 501 jumps is a page on which an update operation is received in the second sub-region 502, an updated page is displayed in the first sub-region 501.
⑥ After receiving the page replication instruction, the first sub-region 501 returns to a previous page of a page displayed when the page replication instruction is received, that is, page B, and an update operation can be performed on the second sub-region 502, and the second sub-region 502 is to be updated with an update operation received by the page in the first sub-region 501. In addition, after the first sub-region 501 receives an update operation for another page, if a page to which the second sub-region 502 jumps is a page on which an update operation is received in the first sub-region 501, an updated page is displayed in the second sub-region 502. Similarly, after the second sub-region 502 receives an update operation for another page, if a page to which the first sub-region 501 jumps is a page on which an update operation is received in the second sub-region 502, an updated page is displayed in the first sub-region 501.

It should be noted that, in some other implementations, different implementations of the display policy may be alternatively used, which cannot be exemplified one by one in this embodiment of this application. A person skilled in the art may set the display policy based on an actual requirement according to an example description provided in the embodiment of this application.

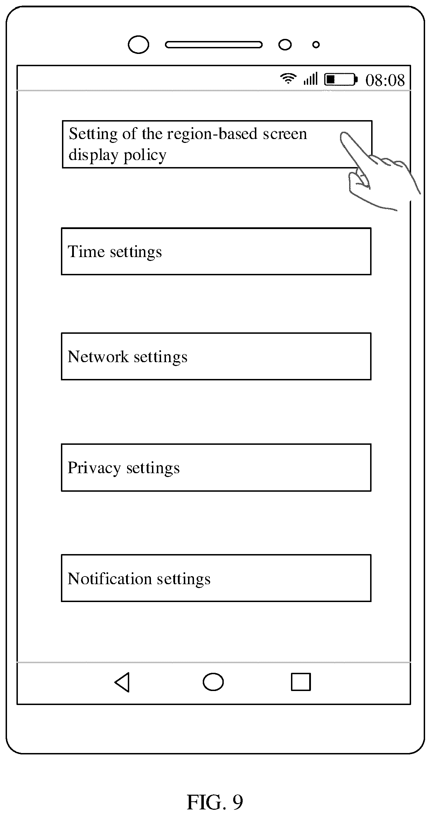

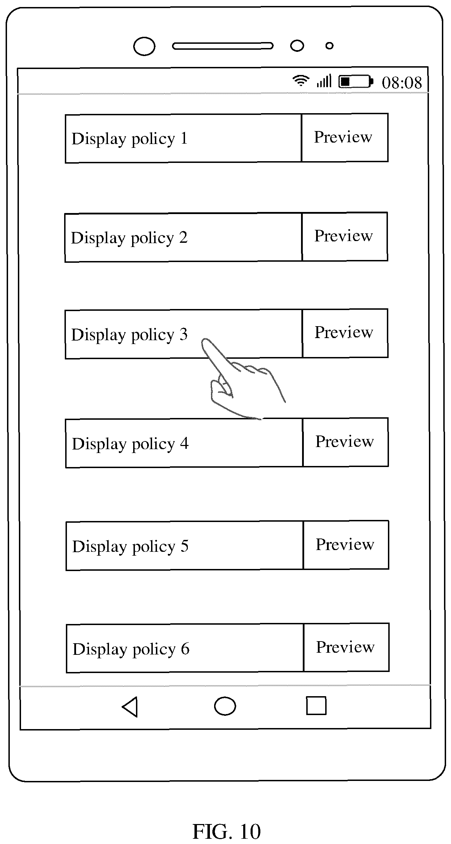

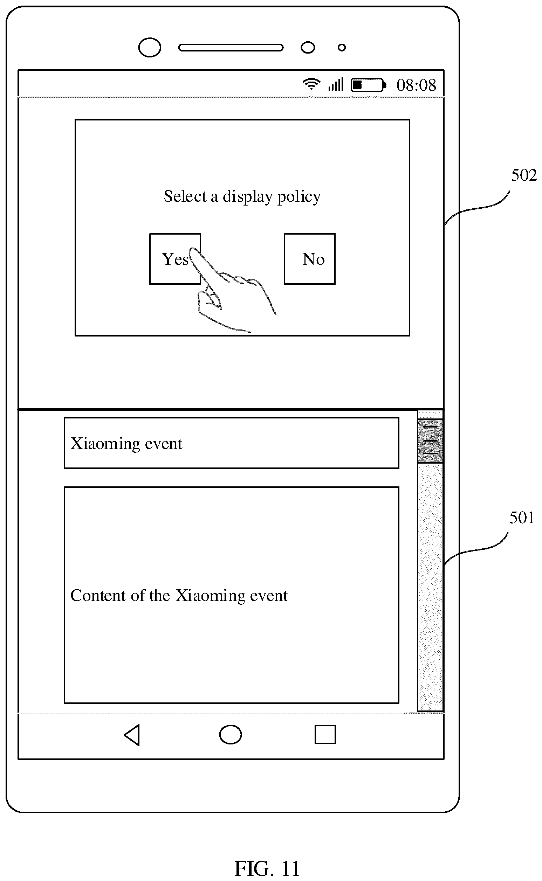

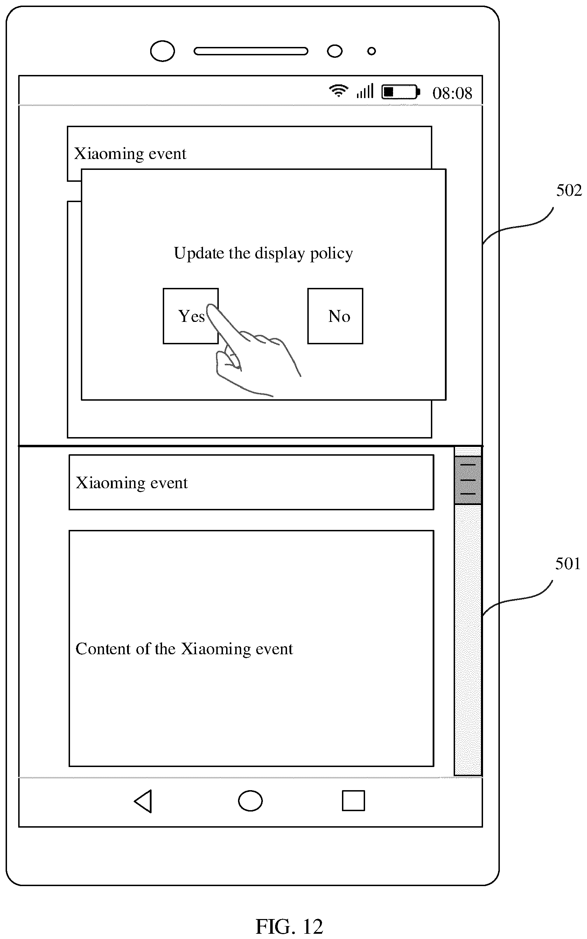

After the page replication instruction is received, it is necessary to determine that one display policy is selected from the plurality of optional display policies. For example, implementations of selecting the display policy may include the following several implementations:
(1) A user presets the mobile phone in settings, and the user may enter a system settings page. As shown in FIG. 9, the user selects display policy settings, and further selects a display policy from provided several optional display policies. For example, as shown in FIG. 10, the provided several display policies are respectively the foregoing six optional display policies. The user may also view an animated video of a corresponding display policy by tapping a "preview" icon shown in FIG. 10, so as to preview an implementation effect of the display policy. A display policy selected by the user is used as a default display policy.
(2) After the user performs a drag touch operation and releases the finger, the user is prompted to select a display policy. As shown in FIG. 11, after the user selects "Yes", an interaction interface shown in FIG. 10 pops up, waiting for the user to select a display policy from several display policies.
(3) After screen splitting has been performed, in a new region obtained through splitting, namely, the second sub-region 502, the user is prompted to update the display policy by long pressing to wake up selection of a region-based screen display policy. As shown in FIG. 12, after the user selects "Yes", the interaction interface shown in FIG. 10 pops up, waiting for the user to select a display policy.

It should be noted that the first sub-region 501 and the second sub-region 502 display pages in a same application, and the first sub-region 501 and the second sub-region 502 may display a same page or different pages in an application.

According to the region-based screen display method provided in this embodiment of this application, screen regions of a terminal can display different pages or a same page of a same application. A user can view different pages or a same page of an application on a screen, which may be applied to a scenario in which the user needs to simultaneously view different content of a same page of an application or content of different pages of an application, thereby facilitating user operations.

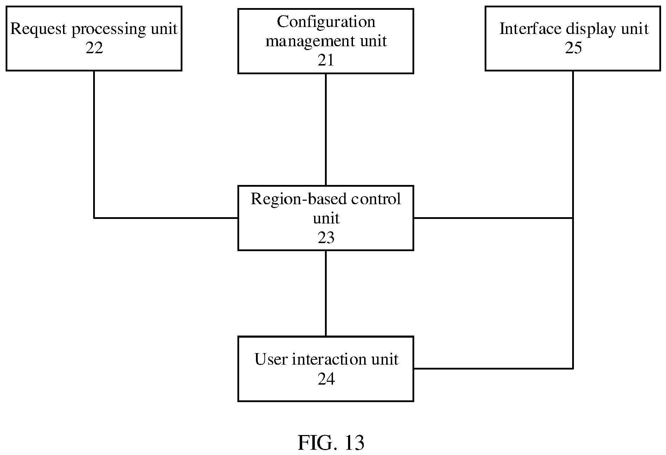

FIG. 13 is a schematic diagram of a software structure of a mobile phone 100 that can be used to perform a region-based screen display method according to an embodiment of this application. As shown in FIG. 13, the mobile phone 100 includes the following software function units: a configuration management unit 21, a request processing unit 22, a region-based control unit 23, a user interaction unit 24, and an interface display unit 25.

Specifically, the configuration management unit 21 is configured to manage and store a configuration of a selected display policy, and may be further configured to manage and store enabling and disabling of a region-based display function, a default display policy, and the like. The request processing unit 22 is configured to identify an operation of a user, determine a request corresponding to the operation of the user, and then forward the request to the region-based control unit 23. The region-based control unit 23 is configured to control and manage a region based on a display policy provided by the configuration management unit 21, determine, based on the provided display policy, a page displayed in each sub-region, and send page content to the interface display unit 25. The user interaction unit 24 is configured to interact with the user, including: asking, in a corresponding trigger logic, the user whether to enable or disable a region splitting function, and asking the user to select a region splitting policy. The interface display unit 25 is configured to display a corresponding display effect on a screen of the mobile phone based on the region-based control unit 23 and the user interaction unit 24, where the display effect includes whether region splitting is implemented, page content displayed in each region, and the like.

Optionally, an implementation process of the foregoing region-based screen display method by using the software structure provided in FIG. 13 is as follows: The request processing unit 22 receives an operation of the user, such as a screen splitting instruction and a page replication instruction, and then sends the corresponding request to the region-based control unit 23. The region-based control unit 23 obtains a display policy from the configuration management unit 21. If the configuration management unit 21 has a selected display policy, the configuration management unit 21 provides the display policy to the region-based control unit 23. If the configuration management unit 21 does not have a selected display policy, the region-based control unit 23 may request to obtain a display policy from the user interaction unit 24. The user interaction unit 24 sends a user interaction interface for requesting to select a display policy to the interface display unit 25. After receiving a display policy selected by the user, the user interaction unit 24 provides a configuration of the display policy to the region-based control unit 23. Optionally, the user interaction unit 24 may further provide the configuration of the display policy to the configuration management unit 21 for storage. Further, the region-based control unit 23 determines a region-based display effect and page content in each sub-region based on the display policy selected by the user, and sends the effect and the page content to the interface display unit 25 for display.

It should be noted that the foregoing software structure and the process of executing the implementation are merely used for exemplary description, and are not intended to constitute a limitation on embodiments of this application. A person skilled in the art can perform different function division for the software structure according to the foregoing exemplary description to implement the foregoing implementation.

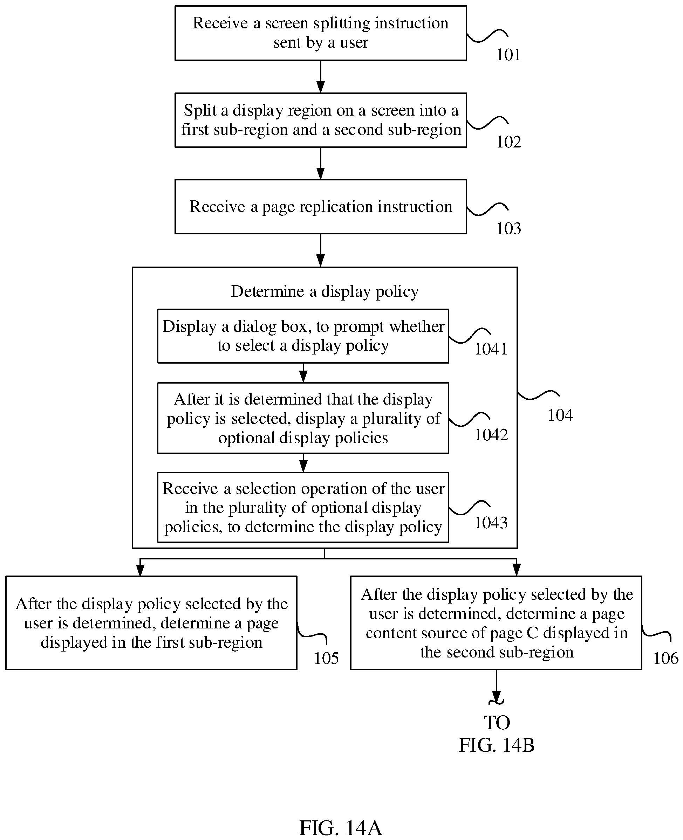

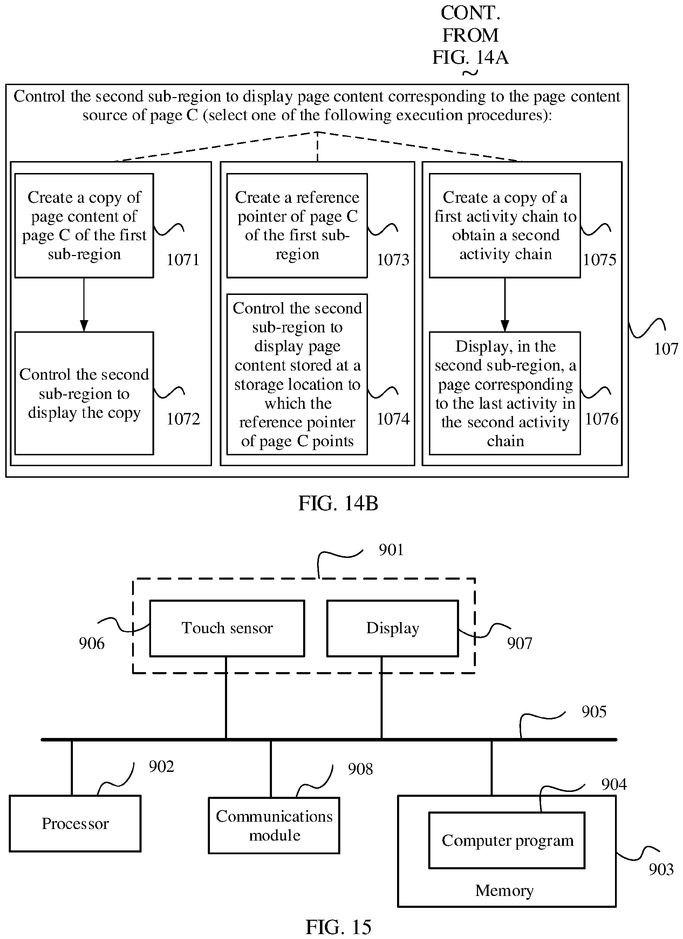

The following describes, by using examples, steps of the region-based screen display method provided in this embodiment of this application. As shown in FIG. 14, the method includes the following steps:
Step 101: A mobile phone receives a screen splitting instruction sent by a user. For example, the user uses a finger (or another medium) to slide from a middle point of a left edge of a screen of the mobile phone to a middle point of a right edge (as shown in FIG. 5), so that the mobile phone receives a screen splitting instruction, thereby triggering region-based screen display.
Step 102: In response to the screen splitting instruction, obtain two sub-regions through division on the screen of the mobile phone: a first sub-region 501 and a second sub-region 502, as shown in FIG. 5. After screen splitting, the first sub-region 501 displays page C on which the screen splitting instruction is received, and the second sub-region 502 may display a blank page or a desktop of the mobile phone.
Step 103: Receive a page replication instruction. The page replication instruction is used to instruct the mobile phone to copy page C displayed in the first sub-region 501 to the second sub-region 502. For example, an operation of the page replication instruction may be shown in FIG. 6, and the user drags page C with a finger in the first sub-region 501 to the second sub-region 502.
Step 104: Determine a display policy.

The display policy is used to determine an execution manner of a page that is displayed in a different sub-region and that is operated after page replication. The display policy may be a pre-determined display policy in a plurality of optional display policies. For example, the display policy may be selected by default by an operating system of the mobile phone, or may be selected in advance by the user, or may be selected after the page replication instruction is received, or may be selected by the user after page replication is executed.

In this embodiment of this application, that the user selects the display policy after the page replication instruction is received is used as an example. A specific execution manner of this step includes the following steps:
Step 1041: Display a dialog box shown in FIG. 11, so as to prompt the user whether to select a display policy.
Step 1042: After the user taps a "Yes" button, display a plurality of optional display policies shown in FIG. 10.
Step 1043: Receive a selection operation of the user in the plurality of optional display policies, so as to determine the display policy.
Step 105: After the display policy selected by the user is determined, determine that a page displayed in the first sub-region 501 is page C or page B. For example, if the display policy is the foregoing example optional display policy ①, ②, or ⑤, the page displayed in the first sub-region 501 is page C; or if the display policy is the foregoing example optional display policy ③, ④, or ⑥, the page displayed in the first sub-region 501 is page B.
Step 106: After the display policy selected by the user is determined, determine a page content source of page C displayed in the second sub-region 502.
Step 107: Control the second sub-region 502 to display page content corresponding to the page content source of page C.

According to different page content sources of page C displayed in the second sub-region 502, step 107 has different execution procedures, which is equivalent to selecting one of the following execution procedures based on the display policy.

### Execution procedure ①:

If the display policy is the foregoing example optional display policy ① or ③, the page content source may be a copy of page C, and correspondingly, step 107 includes:
Step 1071: Create a copy of page content of page C of the first sub-region 501.
Step 1072: Control the second sub-region 502 to display the copy.

In an optional implementation, after the second sub-region is controlled to display the first page, if a first update operation for page C displayed in the first sub-region 501 is received, page content of page C and a copy of the page content of page C are updated based on the first update operation, the first sub-region is controlled to display updated page content of the first page, and the second sub-region is controlled to display an updated copy.

Optionally, after the page replication instruction is received, the first sub-region 501 may jump to another page (not page C) because of a display policy or receiving of a page jump instruction (for example, returning to a previous page or tapping a page address link of another page in a currently displayed page). In this case, the second sub-region 502 still remains on page C. Therefore, it is necessary to determine that the first update operation received in the first sub-region 501 is an update operation for page C. Specifically, a manner of determining that the first update operation is received for page C displayed in the first sub-region 501 may be implemented in the following manner: receiving a first update operation for a page currently displayed in the first sub-region 501, and determining that the page currently displayed in the first sub-region 501 is page C.

In an optional implementation, after the second sub-region is controlled to display the first page, if a second update operation is received for the first page displayed in the second sub-region, it is prohibited to update, based on the second update operation, the first page displayed in the second sub-region.

### Execution procedure (2):

If the display policy is the foregoing example optional display policy ② or ④, the page content source may be a reference pointer of a storage location of page C, and correspondingly, step 107 includes:
Step 1073: Create a reference pointer of page C of the first sub-region 501.
Step 1074: Control the second sub-region 502 to display page content stored at a storage location to which the reference pointer of page C points, that is, page content of page C.

In an optional implementation, after the second sub-region 502 is controlled to display the first page, if a third update operation for page C displayed in the first sub-region 501 is received, the page content of page C is updated based on the third update operation, and the second sub-region 502 is controlled to display updated page content stored at the storage location to which the reference pointer of the page C points, that is, page C displayed in the second sub-region 502 is also updated based on the update operation received on page C in the first sub-region 501.

In an optional implementation, after the second sub-region 502 is controlled to display page C, if a fourth update operation for page C displayed in the second sub-region 502 is received, page C displayed in the second sub-region 502 is prohibited from being updated based on the fourth update operation, that is, an update operation cannot be performed on page C displayed in the second sub-region 502.

In an optional implementation, after the second sub-region 502 is controlled to display page C, if a page jump instruction for the first sub-region 501 is received, a page indicated by the page jump instruction is displayed in the first sub-region 501, and the second sub-region 502 is controlled to continue to display page C. That is, after the first sub-region 501 jumps to another page, the second sub-region 502 still displays page C.

### Execution procedure (3):

If the display policy is the foregoing example optional display policy ⑤ or ⑥, the page content source may be a copy activity of an activity of page C, and correspondingly, step 107 includes:
Step 1075: Create a copy of a first activity chain to obtain a second activity chain, where the first activity chain is an activity chain of a target application when a page replication instruction is received, the activity chain of the target application includes one or more activities linked based on a page start sequence of the target application, each activity corresponds to one page. For example, the target application is the foregoing "browser", and the activity chain of the target application is activity node A→activity node B→activity node C, which are respectively corresponding to an activity of page A, an activity of page B, and an activity of page C.
Step 1076: Display, in the second sub-region 502, a page corresponding to the last activity in the second activity chain, that is, page C.

In an optional implementation, after the second sub-region 502 is controlled to display page C, if a fifth update operation for a page currently displayed in the first sub-region 501 or the second sub-region 502, an activity chain of the other sub-region is searched for an activity corresponding to the page on which the fifth update operation is received, where the other sub-region is a sub-region of the first sub-region and the second sub-region and in which the fifth update operation is not received; and further, page content of the page on which the fifth update operation is received may be updated based on the fifth update operation, and page content corresponding to a found activity may be updated based on the fifth update operation.

In an optional implementation, after the page content corresponding to the found activity is updated based on the fifth update operation, if it is determined that the found activity is an activity corresponding to a page currently displayed in the other sub-region, updated page content of the found activity is displayed in the other sub-region.

In an optional implementation, after the activity corresponding to the page that receives the fifth update operation is found in the activity chain of the other sub-region, it may be determined whether the found activity receives an edit operation. For example, the edit operation may be entering a text in a text box. If a determining result is no, the page content of the page on which the fifth update operation is received is updated based on the fifth update operation, and the page content corresponding to the found activity is updated based on the fifth update operation; otherwise, if the determining result is yes, the page content of the page on which the fifth update operation is received is prohibited from being updated, and the page content corresponding to the found activity is prohibited from being updated.

In an implementation according to the claimed invention, after the second sub-region 502 is controlled to display page C, before the fifth update operation for the page currently displayed in the first sub-region 501 or the second sub-region 502 is received, if a page jump instruction for the first sub-region 501 or the second sub-region 502 is received, a page indicated by the page jump instruction is displayed in a sub-region that receives the page jump instruction, and a sub-region that does not receive the page jump instruction is controlled to maintain a displayed page unchanged.

For example, after receiving the page replication instruction, the mobile phone copies an activity chain that is the same as the activity chain (the first activity chain) of the first sub-region 501 for the second sub-region 502 to obtain the second activity chain, and then displays, in the second sub-region 502, a page corresponding to the last activity of the second activity chain: page C; and the first sub-region 501 still displays page C based on the display policy. After the second sub-region 502 displays page C, if the second sub-region 502 receives an operation that the user indicates to return to a previous page, the second sub-region 502 displays page B. If the user performs an update operation for page B, page content corresponding to page B of the second activity chain is correspondingly updated. In addition, the first activity chain is searched for an activity corresponding to page B. After the activity corresponding to page B is found, it is determined whether page B of the first sub-region 501 is being edited (an edit operation is received). If no edit operation is received, page content corresponding to the activity of page B in the first activity chain may be updated based on the user's update operation. Otherwise, if page B of the first sub-region 501 is being edited, an update operation cannot be performed on page B of the second sub-region 502. In this case, page content of page C is still displayed in the first sub-region 501, and the page content of page B is updated only in background. If the user taps an icon for returning to a previous page in the first sub-region 501, updated page B is displayed.

With reference to the software architecture of the region-based screen display method provided in FIG. 13, an implementation of the region-based screen display method provided in this embodiment of this application in an application scenario is described.

In this application scenario, a user opens a browser, first browses page A (for example, a home page of a search engine), and then taps a news link in page A to enter page B (for example, a news page). On page B, the user taps to view a news link, and enters a specific news page C (for example, Xiaoming event). A mobile phone system stores the foregoing three pages in a manner of using an activity linked list, and the linked list is connected in a sequence of activity node A→activity node B→activity node C, where each activity node in the linked list respectively corresponds to content stored on pages A, B, and C. The content stored includes a page URL (for example, https:www.xxxx.news.com/xiaoming.jsp) and page content. The page content includes: a page title (for example, Xiaoming event), page text box content (for example, Xiaoming goes to an airport), page buttons (for example, follow and unfollow), and a page edit box (for example, an edit box appearing when a comment is made). In the foregoing application scenario, the user slides from left to right by using a finger, so as to enable region-based application display. Then, a mobile phone page is divided into two regions: a first sub-region 501 and a second sub-region 502, where the first sub-region 501 is corresponding to a lower region of the mobile phone, and the second sub-region 502 is corresponding to an upper region of the mobile phone. Page C of the current browser is displayed in the first sub-region 501, and a blank page is displayed in the second sub-region 502.

If the user drags page C in the first sub-region 501 to the second sub-region 502, the operation arrives at the request processing unit 22. The request processing unit 22 determines that a page replication instruction is received, and sends a page replication request to the region-based control unit 23. The region-based control unit 23 reads configuration information of a display policy from the configuration management unit 21. If the user does not configure the display policy, the region-based control unit 23 notifies the user interaction unit 24, and prompts a dialog box to enable the user to select the display policy. An interaction interface may be shown in FIG. 11, and the user is prompted to select the display policy.

When the display policy selected by the user is the foregoing optional display policy (5) or optional display policy ⑥, after dragging, the region-based control unit 23 newly generates an activity chain corresponding to the second sub-region 502 in a memory, and a connection sequence of the activity chain is activity node A1→activity node B1→activity node C1. Page content stored in the activity node A1, the activity node B1, and the activity node C1 is consistent with page content stored in the activity node A, the activity node B, and the activity node C in the first sub-region 501.

Further, the region-based control unit 23 sends, based on the display policy, page content displayed in the second sub-region 502 to the interface display unit 25, which displays the page content in the second sub-region 502. Page C (such as Xiaoming event) displayed in the second sub-region 502 does not support a manual modification operation.

After the second sub-region 502 displays page C, if an update operation (for example, the user performs an update operation such as like or comment) occurs on page C of the first sub-region 501 (for example, Xiaoming event), the region-based control unit 23 refreshes the page content stored in the activity node C in the activity chain corresponding to the first sub-region 501, and also searches an activity chain corresponding to the second sub-region 502 for an activity node that includes a same page (page C). After a page of the activity node C1 is found as page C, the page content stored in the activity node C1 is refreshed based on the update operation received by the first sub-region 501, and then the page content is sent to the interface display unit 25 for updating page C displayed in the second sub-region 502 (including updated like or Xiaoming event in comment information). If page C in the second sub-region 502 receives an edit operation when the user's update operation for page C in the first sub-region 501 is received, the user interaction unit 24 prompts the user to prohibit the update operation.

After the second sub-region 502 displays page C, if the user executes a page jump instruction on page C of the first sub-region 501 to open a new page D (such as Xiaohua event), the displayed page C of the second sub-region 502 does not change accordingly. In the memory, an activity node D (used to store a url and page content of Xiaohua event, where the url and the page content have formats similar to those of Xiaoming event) is added to the activity chain corresponding to the first sub-region 501 and inserted into the tail of the linked list, and the linked list is connected in a sequence of activity node A→activity node B→activity node C→activity node D. The sequence of the activity chain of the second sub-region 502 is still the activity node A1, the activity node B1, and the activity node C1, and has no addition.

After the user opens page D on page C of the first sub-region 501, if the user also opens page D (such as Xiaohua event) on page C of the second sub-region 502, the region-based control unit 23 first searches the activity chain corresponding to the first sub-region 501 for an activity node corresponding to page D. Because the activity node D corresponding to page D exists in the activity chain of the first sub-region 501, the region-based control unit 23 inserts an activity of the activity node D in the activity chain of the first sub-region 501 into the activity chain corresponding to the second sub-region 502, to generate an activity node D1. Storage content of the activity node D1 is consistent with storage content of the activity node D. The sequence of the activity chain corresponding to the second sub-region 502 is activity node A1→activity node B1→activity node C1→activity node D1. When the user updates one page (for example, page D) in two sub-regions, if a same page in the other sub-region is receiving an edit operation, the user interaction unit 24 prompts the user to prohibit the update operation.

After the user opens page D on page C of the first sub-region 501, if a page opened by the user on page C of the second sub-region 502 is page E (for example, Xiaoma event), a node corresponding to page E cannot be found in the activity chain corresponding to the first sub-region 501, the region-based control unit 23 generates a new activity node E in the activity linked list of the second sub-region 502. Content stored on the activity node E includes a url and page content of page E (the url and the activity have similar information formats to those of Xiaoming event), the activity node E is inserted into the activity chain corresponding to the second sub-region 502, and the sequence of the linked list is activity node A1→activity node B1→activity node C1→activity node E.

As shown in FIG. 15, an embodiment of this application discloses a terminal, including a touchscreen 901, where the touchscreen 901 includes a touch sensor 906 and a display screen 907; one or more processors 902; a memory 903; a communication module 908; and one or more computer programs 904. The foregoing devices may be connected by using one or more communication buses 905. The one or more computer programs 904 are stored in the memory 903 and configured to be executed by the one or more processors 902. The one or more computer programs 904 include instructions. The instructions may be used to perform the steps performed by the mobile phone in the foregoing embodiment.

Step 1: Receive a screen splitting instruction.

Step 2: Divide a display region on the screen into at least two sub-regions, where the at least two sub-regions include a first sub-region and a second sub-region.

Step 3: Receive a page replication instruction, where the page replication instruction is used to instruct to copy a first page of a target application that is currently displayed in the first sub-region to the second sub-region.

Step 4: Control the second sub-region to display the first page.

The foregoing descriptions about implementations allow a person skilled in the art to understand that, for the purpose of convenient and brief description, division into the foregoing function modules is used as an example for illustration. In actual application, the foregoing functions can be allocated to different modules and implemented according to a requirement, that is, an inner structure of an apparatus is divided into different function modules to implement all or some of the functions described above. For a detailed working process of the foregoing system, apparatus, and unit, refer to a corresponding process in the foregoing method embodiments. Details are not described herein again.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

## Claims

1. A region-based screen display method, wherein the method comprises:
receiving a screen splitting instruction;
splitting a display region on the screen into at least two sub-regions, wherein the at least two sub-regions comprise a first sub-region (501) and a second sub-region (502);
receiving a page replication instruction, wherein the page replication instruction is used to instruct to copy a first page of a target application currently displayed in the first sub-region (501) to the second sub-region (502); and
controlling the second sub-region (502) to display the first page;
**characterized in that** the controlling the second sub-region (502) to display the first page comprises:
creating a copy of a first activity chain to obtain a second activity chain, wherein the first activity chain is an activity chain of the target application when the page replication instruction is received, the activity chain of the target application comprises one or more activities linked based on a page start sequence of the target application, and each activity corresponds to one page; and
displaying, in the second sub-region (502), a page corresponding to the last activity in the second activity chain;
wherein after the controlling the second sub-region (502) to display the first page, the method further comprises:
receiving a fifth update operation for a page currently displayed in the first sub-region (501) or the second sub-region (502);
searching an activity chain of the other sub-region for an activity corresponding to the page on which the fifth update operation is received, wherein the other sub-region is a sub-region of the first sub-region (501) and the second sub-region (502) and in which the fifth update operation is not received;
updating, based on the fifth update operation, page content of the page on which the fifth update operation is received; and
updating, based on the fifth update operation, page content corresponding to a found activity;
wherein after the controlling the second sub-region (502) to display the first page, and before the receiving a fifth update operation for a page currently displayed in the first sub-region (501) or the second sub-region (502), the method further comprises:
receiving a page jump instruction for the first sub-region (501) or the second sub-region (502); and
displaying, in a sub-region (501, 502) that receives the page jump instruction, a page indicated by the page jump instruction, and controlling a sub-region (501, 502) that does not receive the page jump instruction to maintain a displayed page unchanged.

2. The method according to claim 1, wherein after the updating, based on the fifth update operation, page content corresponding to a found activity, the method further comprises:
determining that the found activity is an activity corresponding to a page currently displayed in the other sub-region; and
displaying updated page content of the found activity in the other sub-region.

3. The method according to any of the previous claims, wherein after the searching an activity chain of the other sub-region (501, 502) for an activity corresponding to the page on which the fifth update operation is received, the method further comprises:
determining whether the found activity receives an edit operation; and
if a determining result is no, updating, based on the fifth update operation, the page content of the page on which the fifth update operation is received, and updating, based on the fifth update operation, the page content corresponding to the found activity; otherwise, if the determining result is yes, prohibiting updating of the page content of the page on which the fifth update operation is received, and prohibiting updating of the page content corresponding to the found activity.

4. The method according to any one of claims 1 to 3, wherein after the receiving a page replication instruction, the method further comprises:
displaying the first page or a second page in the first sub-region (501), wherein the second page is a previous page of the first page of the target application.

5. The method according to claim 4, wherein before the displaying the first page or a second page in the first sub-region (501), the method further comprises:
determining a display policy; and
determining, based on the display policy, that the page displayed in the first sub-region (501) is the first page or the second page.

6. The method according to claim 5, wherein the determining a display policy comprises:
displaying a plurality of optional display policies; and
receiving a selection operation in the plurality of optional display policies, to determine an optional display policy selected by the selection operation as the display policy.

7. The method according to any one of claims 1 to 6, wherein
after the receiving a page replication instruction, the method further comprises: determining a display policy, and determining, based on the display policy, a page content source of the first page displayed in the second sub-region (502); and
the controlling the second sub-region (502) to display the first page comprises: controlling the second sub-region (502) to display page content corresponding to the page content source of the first page.

8. The method according to any one of claims 1 to 7, wherein the screen is a touchscreen, the page replication instruction is a drag touch operation on the touchscreen, a start point of the drag touch operation is in the first sub-region (501), and an end point thereof is in the second sub-region (502).

9. A terminal, wherein the terminal comprises:
a touchscreen (901), wherein the touchscreen (901) comprises a touch sensor (906) and a display (907);
a communications module (908);
one or more processors (902);
one or more memories (903); and
one or more computer programs, wherein the one or more computer programs are stored in the one or more memories (903), the one or more computer programs comprise instructions, and when the instructions are executed by the terminal, the terminal is enabled to perform the region-based screen display method according to any one of claims 1 to 8.

10. A computer storage medium, comprising computer instructions, wherein when the computer instructions are run on a terminal, the terminal is enabled to perform the region-based screen display method according to any one of claims 1 to 8.

11. A computer program product comprising instructions, wherein when the computer program product is run on a terminal, the terminal is enabled to perform the region-based screen display method according to any one of claims 1 to 8.

## Patentansprüche

1. Bereichsbasiertes Bildschirmanzeigeverfahren, wobei das Verfahren umfasst:
Empfangen eines Bildschirmteilungsbefehls;
Aufteilen eines Anzeigebereichs auf dem Bildschirm in mindestens zwei Teilbereiche, wobei die mindestens zwei Teilbereiche einen ersten Teilbereich (501) und einen zweiten Teilbereich (502) umfassen,
Empfangen eines Seitennachbildungsbefehls, wobei der Seitennachbildungsbefehl verwendet wird, um zu befehlen, dass eine erste Seite einer Zielanwendung, die aktuell in dem ersten Teilbereich (501) angezeigt wird, in den zweiten Teilbereich (502) kopiert wird, und
Steuern des zweiten Teilbereichs (502) zum Anzeigen der ersten Seite,
**dadurch gekennzeichnet, dass** das Steuern des zweiten Teilbereichs (502) zum Anzeigen der ersten Seite umfasst:
Erzeugen einer Kopie einer ersten Aktivitätskette, um eine zweite Aktivitätskette zu erhalten, wobei die erste Aktivitätskette eine Aktivitätskette der Zielanwendung ist, wenn der Seitennachbildungsbefehl empfangen wird, die Aktivitätskette der Zielanwendung eine oder mehrere Aktivitäten umfasst, die basierend auf einer Seitenstartsequenz der Zielanwendung verknüpft sind, und jede Aktivität einer Seite entspricht; und
Anzeigen, in dem zweiten Teilbereich (502), einer Seite, die der letzten Aktivität in der zweiten Aktivitätskette entspricht;
wobei das Verfahren nach dem Steuern des zweiten Teilbereichs (502) zum Anzeigen der ersten Seite außerdem umfasst:
Empfangen einer fünften Aktualisierungsoperation für eine Seite, die aktuell in dem ersten Teilbereich (501) oder dem zweiten Teilbereich (502) angezeigt wird,
Suchen in einer Aktivitätskette des anderen Teilbereichs nach einer Aktivität, die der Seite entspricht, auf der die fünfte Aktualisierungsoperation empfangen wird, wobei der andere Teilbereich ein Teilbereich des ersten Teilbereichs (501) und des zweiten Teilbereichs (502) ist und in dem die fünfte Aktualisierungsoperation nicht empfangen wird,
Aktualisieren, basierend auf der fünften Aktualisierungsoperation, eines Seiteninhalts der Seite, auf der die fünfte Aktualisierungsoperation empfangen wird, und
Aktualisieren, basierend auf der fünften Aktualisierungsoperation, eines Seiteninhalts, der einer gefundenen Aktivität entspricht;
wobei das Verfahren nach dem Steuern des zweiten Teilbereichs (502) zum Anzeigen der ersten Seite und vor dem Empfangen einer fünften Aktualisierungsoperation für eine Seite, die aktuell in dem ersten Teilbereich (501) oder dem zweiten Teilbereich (502) angezeigt wird, außerdem umfasst:
Empfangen eines Seitensprungbefehls für den ersten Teilbereich (501) oder den zweiten Teilbereich (502); und
Anzeigen in einem Teilbereich (501, 502), der den Seitensprungbefehl empfängt, einer Seite, die von dem Seitensprungbefehl angegeben wird, und Steuern eines Teilbereichs (501, 502), der den Seitensprungbefehl nicht empfängt, sodass eine angezeigte Seite unverändert bleibt.

2. Verfahren nach Anspruch 1, wobei das Verfahren nach dem Aktualisieren, basierend auf der fünften Aktualisierungsoperation, eines Seiteninhalts, der einer gefundenen Aktivität entspricht, außerdem umfasst:
Ermitteln, dass die gefundene Aktivität eine Aktivität ist, die einer Seite entspricht, die aktuell in dem anderen Teilbereich angezeigt wird, und
Anzeigen eines aktualisierten Seiteninhalts der gefundenen Aktivität in dem anderen Teilbereich.

3. Verfahren nach einem der vorhergehenden Ansprüche, wobei das Verfahren nach dem Suchen in einer Aktivitätskette des anderen Teilbereichs (501, 502) nach einer Aktivität, die der Seite entspricht, auf der die fünfte Aktualisierungsoperation empfangen wird, außerdem umfasst:
Ermitteln, ob die gefundene Aktivität eine Editieroperation empfängt, und,
wenn ein Ermittlungsergebnis Nein ist, Aktualisieren, basierend auf der fünften Aktualisierungsoperation, des Seiteninhalts der Seite, auf der die fünfte Aktualisierungsoperation empfangen wird, und Aktualisieren, basierend auf der fünften Aktualisierungsoperation, des Seiteninhalts, welcher der gefundenen Aktivität entspricht; andernfalls, wenn das Ermittlungsergebnis Ja ist, Unterbinden des Aktualisierens des Seiteninhalts der Seite, auf der die fünfte Aktualisierungsoperation empfangen wird, und Unterbinden des Aktualisierens des Seiteninhalts, welcher der gefundenen Aktivität entspricht.

4. Verfahren nach einem der Ansprüche 1 bis 3, wobei das Verfahren nach dem Empfangen eines Seitennachbildungsbefehls außerdem umfasst:
Anzeigen der ersten Seite oder einer zweiten Seite in dem ersten Teilbereich (501), wobei die zweite Seite eine der ersten Seite vorhergehende Seite der Zielanwendung ist.

5. Verfahren nach Anspruch 4, wobei das Verfahren vor dem Anzeigen der ersten Seite oder einer zweiten Seite in dem ersten Teilbereich (501) außerdem umfasst:
Ermitteln einer Anzeigerichtlinie, und
Ermitteln, basierend auf der Anzeigerichtlinie, dass die Seite, die in dem ersten Teilbereich (501) angezeigt wird, die erste Seite oder die zweite Seite ist.

6. Verfahren nach Anspruch 5, wobei das Ermitteln einer Anzeigerichtlinie umfasst:
Anzeigen einer Vielzahl von optionalen Anzeigerichtlinien; und
Empfangen einer Auswahloperation in der Vielzahl von optionalen Anzeigerichtlinien, um eine optionale Anzeigerichtlinie zu ermitteln, die durch die Auswahloperation als die Anzeigerichtlinie ausgewählt wird.

7. Verfahren nach einem der Ansprüche 1 bis 6, wobei
das Verfahren nach dem Empfangen eines Seitennachbildungsbefehls außerdem umfasst: Ermitteln einer Anzeigerichtlinie, und Ermitteln, basierend auf der Anzeigerichtlinie, einer Seiteninhaltsquelle der ersten Seite, die in dem zweiten Teilbereich (502) angezeigt wird, und
wobei das Steuern des zweiten Teilbereichs (502) zum Anzeigen der ersten Seite umfasst: Steuern des zweiten Teilbereichs (502) zum Anzeigen des Seiteninhalts, welcher der Seiteninhaltsquelle der ersten Seite entspricht.

8. Verfahren nach einem der Ansprüche 1 bis 7, wobei der Bildschirm ein Touchscreen ist, der Seitennachbildungsbefehl eine Zugberührungsoperation auf dem Touchscreen ist, ein Startpunkt der Zugberührungsoperation in dem ersten Teilbereich (501) liegt und ein Endpunkt davon in dem zweiten Teilbereich (502) liegt.

9. Endgerät, wobei das Endgerät umfasst:
einen Touchscreen (901), wobei der Touchscreen (901) einen Berührungssensor (906) und eine Anzeige (907) umfasst,
ein Kommunikationsmodul (908);
einen oder mehrere Prozessoren (902);
einen oder mehrere Speicher (903); und
ein oder mehrere Computerprogramme, wobei das eine oder die mehreren Computerprogramme in dem einen oder den mehreren Speichern (903) gespeichert sind, das eine oder die mehreren Computerprogramme Befehle umfassen, und, wenn die Befehle durch das Endgerät ausgeführt werden, das Endgerät aktiviert wird, um das bereichsbasierte Bildschirmanzeigeverfahren nach einem der Ansprüche 1 bis 8 durchzuführen.

10. Computerspeichermedium, das Computerbefehle umfasst, wobei, wenn die Computerbefehle in einem Endgerät ablaufen, das Endgerät aktiviert wird, um das bereichsbasierte Bildschirmanzeigeverfahren nach einem der Ansprüche 1 bis 8 durchzuführen.

11. Computerprogrammprodukt, das Befehle umfasst, wobei, wenn das Computerprogrammprodukt in einem Endgerät abläuft, das Endgerät aktiviert wird, um das bereichsbasierte Bildschirmanzeigeverfahren nach einem der Ansprüche 1 bis 8 durchzuführen.

## Revendications

1. Procédé d'affichage d'écran par région, le procédé comprenant les étapes consistant à :
recevoir une instruction de division d'écran ;
diviser une région d'affichage sur l'écran en au moins deux sous-régions, les au moins deux sous-régions comprenant une première sous-région (501) et une seconde sous-région (502) ;
recevoir une instruction de réplication de page, l'instruction de réplication de page étant utilisée pour donner l'instruction de copier vers la seconde sous-région (502) une première page d'une application cible actuellement affichée dans la première sous-région (501) ; et
commander la seconde sous-région (502) pour qu'elle affiche la première page ;
le procédé étant **caractérisé en ce que** la commande de la seconde sous-région (502) pour qu'elle affiche la première page comprend les étapes consistant à :
créer une copie d'une première chaîne d'activités pour obtenir une seconde chaîne d'activités, la première chaîne d'activités étant une chaîne d'activités de l'application cible lorsque l'instruction de réplication de page est reçue, la chaîne d'activités de l'application cible comprenant une ou plusieurs activités liées sur la base d'une séquence de début de page de l'application cible, et chaque activité correspondant à une page ; et
afficher, dans la seconde sous-région (502), une page correspondant à la dernière activité de la seconde chaîne d'activités ;
le procédé comprenant en outre, après la commande de la seconde sous-région (502) pour qu'elle affiche la première page, les étapes consistant à :
recevoir une cinquième opération de mise à jour pour une page actuellement affichée dans la première sous-région (501) ou la seconde sous-région (502) ;
rechercher, dans une chaîne d'activités de l'autre sous-région, une activité correspondant à la page pour laquelle la cinquième opération de mise à jour est reçue, l'autre sous-région étant une sous-région parmi la première sous-région (501) et la seconde sous-région (502) pour laquelle la cinquième opération de mise à jour n'est pas reçue ;
mettre à jour, sur la base de la cinquième opération de mise à jour, un contenu de page de la page pour laquelle la cinquième opération de mise à jour est reçue ; et
mettre à jour, sur la base de la cinquième opération de mise à jour, un contenu de page correspondant à une activité trouvée ;
le procédé comprenant en outre, après la commande de la seconde sous-région (502) pour qu'elle affiche la première page et avant la réception d'une cinquième opération de mise à jour pour une page actuellement affichée dans la première sous-région (501) ou la seconde sous-région (502), les étapes consistant à :
recevoir une instruction de saut de page pour la première sous-région (501) ou la seconde sous-région (502) ; et
afficher, dans une sous-région (501, 502) qui reçoit l'instruction de saut de page, une page indiquée par l'instruction de saut de page et commander une sous-région (501, 502) qui ne reçoit pas l'instruction de saut de page pour qu'elle maintienne une page affichée inchangée.

2. Procédé selon la revendication 1, le procédé comprenant en outre, après la mise à jour, sur la base de la cinquième opération de mise à jour, du contenu de page correspondant à une activité trouvée, les étapes consistant à :
déterminer que l'activité trouvée est une activité correspondant à une page actuellement affichée dans l'autre sous-région ; et
afficher un contenu de page mis à jour de l'activité trouvée dans l'autre sous-région.

3. Procédé selon l'une quelconque des revendications précédentes, le procédé comprenant en outre, après la recherche, dans une chaîne d'activités de l'autre sous-région (501, 502), d'une activité correspondant à la page pour laquelle la cinquième opération de mise à jour est reçue, les étapes consistant à :
déterminer si l'activité trouvée reçoit une opération de modification ; et
si le résultat de la détermination est non, mettre à jour, sur la base de la cinquième opération de mise à jour, le contenu de page de la page pour laquelle la cinquième opération de mise à jour est reçue, et mettre à jour, sur la base de la cinquième opération de mise à jour, le contenu de page correspondant à l'activité trouvée ; sinon, si le résultat de la détermination est oui, interdire la mise à jour du contenu de page de la page pour laquelle la cinquième opération de mise à jour est reçue, et interdire la mise à jour du contenu de page correspondant à l'activité trouvée.

4. Procédé selon l'une quelconque des revendications 1 à 3, le procédé comprenant en outre, après la réception d'une instruction de réplication de page, l'étape consistant à : afficher la première page ou une seconde page dans la première sous-région (501), la seconde page étant une page précédant la première page de l'application cible.

5. Procédé selon la revendication 4, le procédé comprenant en outre, avant l'affichage de la première page ou d'une seconde page dans la première sous-région (501), les étapes consistant à :
déterminer une stratégie d'affichage ; et
déterminer, sur la base de la stratégie d'affichage, que la page affichée dans la première sous-région (501) est la première page ou la seconde page.

6. Procédé selon la revendication 5, dans lequel la détermination d'une stratégie d'affichage comprend les étapes consistant à :
afficher une pluralité de stratégies d'affichage optionnelles ; et
recevoir une opération de sélection dans la pluralité de stratégies d'affichage optionnelles, afin de déterminer en tant que stratégie d'affichage une stratégie d'affichage optionnelle sélectionnée par l'opération de sélection.

7. Procédé selon l'une quelconque des revendications 1 à 6,
le procédé comprenant en outre, après la réception d'une instruction de réplication de page, les étapes consistant à : déterminer une stratégie d'affichage et déterminer, sur la base de la stratégie d'affichage, une source de contenu de page de la première page affichée dans la seconde sous-région (502) ; et
la commande de la seconde sous-région (502) pour qu'elle affiche la première page comprenant l'étape consistant à : commander la seconde sous-région (502) pour qu'elle affiche un contenu de page correspondant à la source de contenu de page de la première page.

8. Procédé selon l'une quelconque des revendications 1 à 7, dans lequel l'écran est un écran tactile, l'instruction de réplication de page est une opération de glisser-déposer sur l'écran tactile, un point de départ de l'opération de glisser-déposer se situe dans la première sous-région (501), et un point d'arrivée correspondant se situe dans la seconde sous-région (502).

9. Terminal, le terminal comprenant :
un écran tactile (901), l'écran tactile (901) comprenant un capteur tactile (906) et une unité d'affichage (907) ;
un module de communication (908) ;
un ou plusieurs processeurs (902) ;
une ou plusieurs mémoires (903) ; et
un ou plusieurs programmes informatiques, le ou les programmes informatiques étant stockés dans la ou les mémoires (903), le ou les programmes informatiques comprenant des instructions qui, lorsqu'elles sont exécutées par le terminal, permettent au terminal d'effectuer le procédé d'affichage d'écran par région selon l'une quelconque des revendications 1 à 8.

10. Support de stockage informatique, comprenant des instructions informatiques qui, lorsqu'elles sont exécutées sur un terminal, permettent au terminal d'effectuer le procédé d'affichage d'écran par région selon l'une quelconque des revendications 1 à 8.

11. Produit-programme informatique comprenant des instructions, le produit-programme informatique, lorsqu'il est exécuté sur un terminal, permettant au terminal d'effectuer le procédé d'affichage d'écran par région selon l'une quelconque des revendications 1 à 8.
